# EUROPEAN PATENT APPLICATION

(11) **EP 1 529 823 A1**
(43) Date of publication of application: **11.05.2005**
(21) Application number: 04024846.0
(22) Date of filing: 19.10.2004
(51) Int. Cl.: C09D 183/10, D06M 15/643, D06N 3/12, B60R 21/16

(54) **Textile products and silicone-based copolymeric coating compositions for textile products**

(30) Priority: 06.11.2003 US 702823
(71) Applicant: Milliken & Company, Spartanburg, SC 29303 (US)
(72) Inventor: Parker, Richard Henry, LaGrange, GA 30240 (US)
(74) Representative: HOFFMANN - EITLE

(57) **Abstract**

A coating composition for textiles may be prepared by polymerizing monomers composed from silicones with monomers composed of non-silicone components to create a copolymer. The non-silicone monomers may be selected from a group containing: ethylene, vinyl acetate, propylene, butadiene, isobutene, isoprene and esters of acrylic acid. Based on the functionality of the copolymer, it may be crosslinked by a variety of catalysts, or through the use of a short silicone polymer, to yield a fabric coating. The coating composition may be used to coat textiles, such as automotive safety restraint cushions or airbags, to assist in reducing air permeability of the coated textile.

## Description

### Background of the Invention

Airbags have become a required safety feature in motor vehicles. In the event of a collision, airbags are rapidly inflated with gas to act as a barrier between the driver or passenger and the steering wheel or dashboard of the automobile.

Driver side airbags are generally mounted within steering wheel assemblies and exhibit relatively low air retention in order to act as a cushion for the driver upon impact. Indeed, the purpose of a driver side airbag is to deflate during the impact of the occupant to slow the motion of the occupant into the steering wheel. Air retention usually is only required until the bag can be filled, which is a very short period of time.

Passenger airbags, which are mounted upon the passenger side of vehicles, are designed to operate in a similar manner. Passenger-side airbags comprise relatively high air permeability fabrics that facilitate the release of gas either by percolation of the gas through the fabric or through vents integrated therein. Both of these types of airbags (composed of multiple fabric panels) are designed to protect persons in sudden collisions and generally burst out of packing modules from either a steering column or dashboard to absorb a single large and relatively predictable impact. These airbags are designed to deflate upon contact with the occupant to reduce forward momentum into the dashboard.

Side curtain or side mounted airbags, however, are designed primarily to protect passengers during rollover crashes by retaining the inflation state for a relatively long period of time. A rolling vehicle is capable of ejecting occupants through the side window. A rolling vehicle may experience a loss of side door integrity, and side doors and side windows may be compromised. Therefore, there may be a need for side curtain airbag inflation and integrity for periods of time (up to about 8 seconds, or more), which are much longer than that required for front impact airbags. Side curtain airbags generally unroll from housing locations within the roofline and along the side windows of an automobile. In doing so, side curtain airbags not only provide cushioning effects but also provide protection from broken glass and other debris. These airbags may also contact the ground during the roll. Therefore, it is imperative that side curtain airbags retain their inflating gasses at relatively high inflation pressures for significant periods of time, as compared to a driver or passenger airbag. Structural integrity and strength of such structures is very important.

To control permeation of inflating gasses, coatings may be applied to fabrics used in automotive airbags. Such coatings usually are designed to resist the unwanted percolation of air through the fabric and to a lesser extent they serve to protect the fabric and the occupant from the hot gases used to inflate the airbags.

Silicone polymers currently are the most prevalent materials used for airbag coatings. While possessing a great deal of resistance to detriment under severe environmental conditions, silicone polymers have relatively high permeability to gases when compared to other elastomers. As stated above, permeability to gases is generally undesirable for an airbag coating. This feature, however, has not been a matter of significant concern in coatings used for driver side and passenger side airbags, because the retention time requirements for these impact airbags are relatively brief. However, as previously stated, through the advent of side curtain airbags, which require longer duration gas retention in the airbag, it has become a goal to develop an airbag coating that is more resistant to gas leakage than can be realized with customary silicone polymers.

It is possible to improve the air retention of an airbag by applying a large amount of coating in a relatively thick layer. However, thick coatings are usually not desirable, in that it usually requires a greater cost expenditure to thickly coat an airbag. Thickly coated airbags are thicker when folded, which caues the folded airbag to occupy a greater space in the airbag module of an automobile, which is undesirable.

Solvents are costly, and present environmental challenges or issues. Furthermore, solvents have special chemical and manufacturing concerns that desirably may be avoided. A coating composition that may be successfully applied to an airbag without using solvents would be particularly useful. A coating composition that is capable of improving the level or air retention in a coated airbag over that of a coating composition composed entirely of silicone is becoming more desirable in the industry. In general, improved and highly functional silicone-based coatings are needed.

### Brief Description of the Drawings

A full and enabling disclosure of this invention, including the best mode shown to one of ordinary skill in the art, is set forth in this specification. The following Figures illustrate the invention:
Figure 1 is a schematic diagram of reaction events that may be used to synthesize coating compounds of the present invention; and
Figure 2 shows yet another set of reaction events that may be employed in making coating compounds for application to textiles, including for example, automotive airbags.

### Detailed Description of the Invention

Reference now will be made to the embodiments of the invention, one or more examples of which are set forth below. Each example is provided by way of explanation of the invention, not as a limitation of the invention. In fact, it will be apparent to those skilled in the art that various modifications and variations can be made in this invention without departing from the scope or spirit of the invention.

In general, a blend of non-silicone polymers with a silicone polymers, when used as an airbag coating, may greatly enhance the retention of the inflating gases. This has become important due to the development of Jacquard type woven airbags. These airbags are known in the trade as one-piece-woven or "OPW" airbags. In these airbags, the structure of the airbag is created in the weaving process, rather than in the process of cutting a flat fabric into pieces and sewing them into a bag. While creating an economic savings by eliminating the need to cut and sew the bag, it can be seen that it is now required (because the airbag has been created prior to the ability to apply a coating) that the coating be applied on the outside of the airbag. This obviates the ability of the substrate fabric to act as a structural reinforcement for the coating, and creates a situation in which the coating can be dislodged from the fabric by the inflating gasses. The limitations of a coating comprised of silicone alone are magnified by this new development. For this optimum blend of polymers to occur, both the silicone and non-silicone polymers must be soluble in a common coating solvent. However, this creates limitations in the non-silicone polymers that can be used for this purpose, and may preclude the ability to coat the fabric without using a solvent.

It may be envisioned that a copolymer coating composition may be formed by creating a copolymer, composed of dimethylsiloxane or polydimethylsiloxane segments combined with the reaction products of alkenic monomers, and terminated on both ends with a hydridosilane (Si-H) group. This structure may be crosslinked with a vinyl containing silicone copolymer, using a noble metal catalyst, such as platinum, in a manner well known in the trade.

In one potential reaction, an excess of a relatively small silicone-based copolymer, terminated at the ends with Si-H groups, might be reacted with a copolymer of ethylene and another unsaturated monomer, by crosslinking them, using a catalyst to form a new copolymer, also terminated with Si-H groups. This copolymer might then be reacted with a typical vinyl containing silicone copolymer to yield a coating compound which might have the positive properties of the blended polymers noted previously. Non-silicone monomers that may be used to create this type of copolymer may be contained in the group consisting of: ethylene, vinyl acetate, propylene, butadiene, isobutylene, acrylonitrile, isoprene, and esters of acrylic acid.

One potential advantage of the invention is that its use facilitates forming such coating compositions using monomers having widely divergent solubility parameters, and does not usually require that the solubility parameters of the monomers be closely aligned. The importance of the similarity of the solubility parameter of the silicone polymer and the solubility parameter of the non-silicone copolymer in many prior polymer systems should be noted. The generation of this new copolymer by way of the invention may facilitate the creation of new coating compounds that may not be possible by using only blends, because of the dissimilarity of the solubility parameters of some potential functionalities of the respective molecules.

Some applications of the invention may avoid or minimize the need for solvent as well. There are currently available coating formulations composed of silicone polymers, the components of which are in liquid form and are known in the trade as "liquid silicone rubbers" or LSRs. These formulations are similar to the coating compounds described above in that one component consists of a silicone polymer containing Si-H functionality and another component contains a silicone polymer with vinyl functionality. Compounded into one of the components is a curing system, usually based on platinum. The user mixes the two components and the resultant liquid becomes the coating compound and can be applied to a fabric, usually without the need for a solvent.

If the proposed invention, described above, can be designed in such a manner that the copolymer containing the Si-H functionality is in liquid form and is combined with a silicone polymer with vinyl functionality that currently exists in liquid form, it may be that a liquid coating compound may be formulated that would allow the desired properties of a blend of silicone and non-silicone polymers in solvent to be achieved without the need for solvent.

In general, copolymers that may be candidates for the coating of the present invention include those having a chemical functionality that will provide improvement in the desired final textile product properties.

One application of the invention comprises a method of preparing a coating for application to a textile including these steps:
(a) providing silicone-containing monomers;
(b) providing at least one non-silicone monomer selected from the group of monomers consisting of: ethylene, vinyl acetate, propylene, butadiene, isobutylene, acrylonitrile, isoprene, and esters of acrylic acid;
(c) polymerizing said silicone-containing monomers with at least one of the said non-silicone monomers to form a plurality of copolymeric chains;
(d) providing a catalyst adapted to facilitate the formation of chemical bonds between said plurality of copolymeric chains; and
(e) reacting said catalyst with said copolymeric chains to form a coating.

In one application of the invention, an oligomer which is terminated at both ends with alkenic functionality (or containing more than one alkene per mole in extremely small quantities) may be reacted with a large molar excess of Si-H terminated PDMS oligomer (as but one example) and catalytic platinum (Pt), to yield a Si-H terminated block copolymer of polydimethylsiloxane (PDMS) and the organic oligomer.

This new copolymer has terminal Si-H groups which can be incorporated with a conventional vinyl containing silicone polymer to yield a new polymeric network when catalyzed with platinum-type catalysts. This facilitates introduction of organic functionality into a silicone polymer, the nature of which is determined by the identity of the monomeric organic moiety.

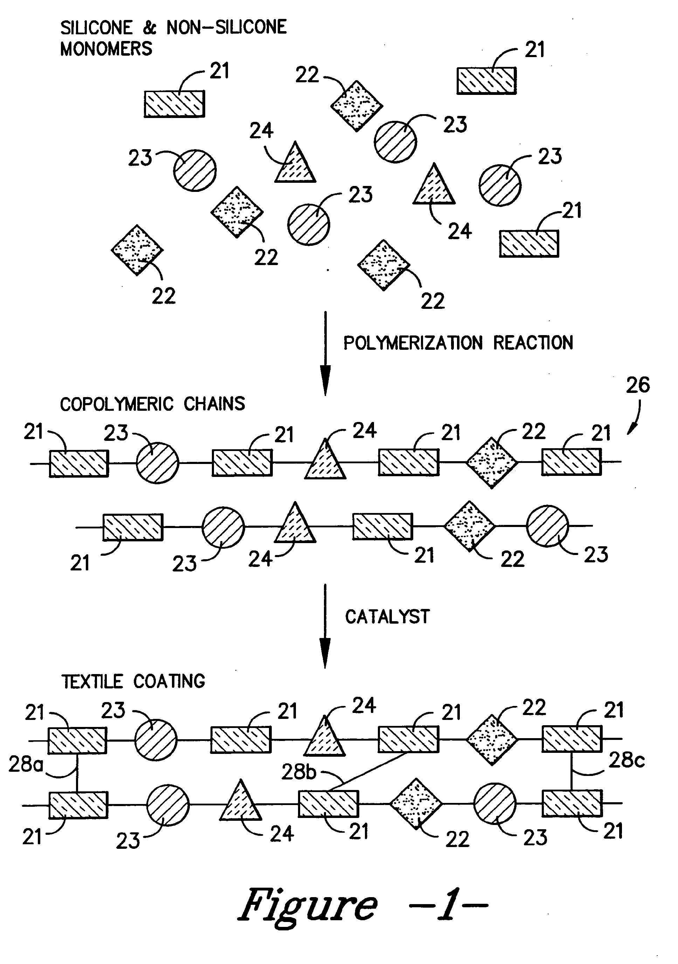

Figure 1 shows a particular embodiment of the invention in which small silicone co-polymers or di-substituted siloxane monomers, 21, are allowed to react with non-silicone monomers, 22, 23 and 24, in a polymerization reaction. These silicone containing components usually must contain some functionality for subsequent crosslinking of the coating composition. The resulting silicone/non-silicone copolymer may then be dissolved in a solvent, along with a suitable catalyst, to create the coating compound. The catalyst must be chosen so that upon addition of heat in the curing process, the necessary crosslinking bonds, 28a, 28b, and 28c, may be formed. If the silicone functionality is a hydroxy group, then the catalyst may be one of the group of "condensation catalysts", known in the trade, and made up of compounds of tin, titanium and the like. If the silicone functionality is a vinyl group then the catalyst may be platinum (or platinum compounds) or other noble metals.

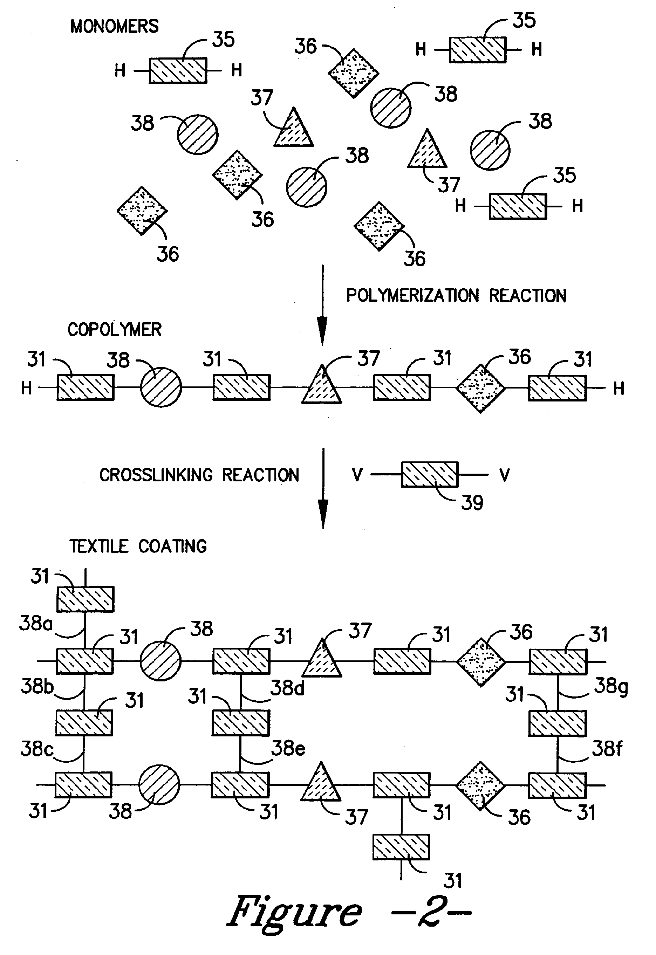

Figure 2 shows a particular embodiment of the invention in which silicone polymers, terminated with Si-H functionality 35 and non-silicone monomers 36, 37, and 38 might be reacted in a polymerization reaction to form a copolymer. That copolymer might then be reacted in a second reaction with vinyl-containing silicone monomers to form a copolymeric textile coating having crosslinking chemical bonds 38a-g.

Yet another embodiment of the invention is one in which certain non-silicone monomers are polymerized into a copolymer. This copolymer is then allowed to react, in a second reaction, with polymeric silicones, terminated with Si-H functionality in the manner stated above. Following the same reaction sequence as that above, a copolymeric textile coating might be created. This embodiment would allow the use of commercially available non-silicone copolymers to create the coating compound without the necessity of proceeding directly from non-silicone monomers.

Figures 1 and 2 are merely schematic in nature, and are intended to explain the reaction sequence and overall structure of copolymers that might result from this invention. Specific monomers that could be employed in the practice of the invention, which would produce specific copolymers, are provided in detail herein as well.

### Example 1

As an example of the type of coating compound that might be created from a reaction of the type illustrated in Figure 1, consider the following:

A mixture of ethylene, butyl acrylate, and a hydroxyl terminated polydimethylsiloxane may be combined with a polymerization catalyst such as t-butyl peroxide. This mixture may then be heated to a point at which the peroxide is activated. After a suitable period of time, excess monomers may then be removed by standard methods, such as evaporation or solvent extraction. It would be expected that a copolymer of ethylene, butyl acrylate and dimethylsiloxane would be obtained. This copolymer most likely would have silicone-hydroxy functionality.

It can be expected that this copolymer could be dissolved in a suitable solvent and combined with a condensation catalyst, such as a titanium ester to form a coating compound. When applied to a fabric, wherein a condensation catalyst is activated, the resultant coating which is formed can be expected to be crosslinked in a manner similar to that shown in 28a-c of Figure 1. It would be expected that this coated fabric would possess properties which in many ways are superior to properties of fabrics coated with silicone polymer alone.

### Example 2

As an example of the type of coating compound that might be created from a reaction of the type outlined in Figure 2, consider the following:

A commercially available copolymer, containing a small amount of vinyl functionality, such as EPDM, (a copolymer of ethylene, propylene and a diene, available from DuPont, Bayer and other manufacturers) can be dissolved in a suitable solvent along with an excess of a α,ω Si-H terminated polydimethylsiloxane polymer, of relatively small molecular weight. If these materials are allowed to react with a noble metal catalyst such as platinum (possibly as hexachloroplatinate hexahydrate (IV)) and the unwanted by products are removed by standard methods, a copolymer of ethylene, propylene and dimethylsiloxane can be obtained. It would be expected that this copolymer would be terminated with Si-H functionality. This silicone/non-silicone copolymer combination could then be combined with a vinyl containing silicone polymer (available from many sources such as Dow Corning, Wacker and others, under many trade names), and a noble metal catalyst to form a coating compound. Depending upon the nature of the copolymer, a solvent may or may not be required to create an appropriate coating compound. When applied to a fabric, with a catalyst activated, the resultant coating formed would be expected to be crosslinked in the manner of that shown by bonds 38a-g of Figure 2.

The invention is not limited to only those monomers listed above, and other applications of the invention could employ any suitable monomers capable of forming a crosslinked coating.

As noted in the examples, once compounding is complete, the formulation is preferably scrape coated across the textile or airbag fabric, and the solvent (toluene, for example), if present, is subsequently removed by evaporation by placing the treated airbag base fabric in an oven at about 60-90 degrees Centigrade. The resultant coated airbag base fabric is then cured in an oven at 150-200 degrees Centigrade to form a thin coating.

If an airbag fabric is desired, any low permeability airbag fabric construction may be utilized as the target airbag fabric with the inventive composition. In one embodiment of the invention, the target airbag fabric within this invention is a plain woven fabric, formed from yarns comprising polyamide or polyester fibers. Such yarn may have a linear density of about 210 denier to about 630 denier. Such yarns usually are formed from multiple filaments, wherein the filaments have linear densities of about 6 denier per filament or less, or in other applications, about 4 denier per filament or less.

Scrape coating includes, but is not limited to, knife coating such as knife over roll, knife over gap, knife over table, floating knife and knife over foam pad, to name a few types. Since the coating composition would be expected to exhibit excellent adhesive properties, generally only one coating pass would be necessary to provide an effective, stable, low permeability coating on a target fabric surface. However, there is no reason that the invention could not be applied and include multiple passes or coats.

The final dry weight of the coating preferably would be about 3 ounces per square yard or less and may also in some applications be about 1 ounce per square yard or less. The resultant base fabric should be substantially impermeable to air, when measured according to ASTM Test D737, "Air Permeability of Textile Fabrics".

The substrate fabric used in the practice of the invention could be constructed from natural fibers, such as cotton, ramie, abaca, wool and the like. In some applications, synthetic fibers such as polyester, polyamide, regenerated cellulose and the like, and inorganic fibers such as glass, boron derivative fibers and the like, could be employed. The textile could be an automotive airbag or any other textile material that requires a coating that will assist in resisting air permeability.

It is understood by one of ordinary skill in the art that the present discussion is a description of exemplary embodiments only, and is not intended as limiting the broader aspects of the present invention, which broader aspects are embodied in the exemplary constructions. The invention is shown by example in the appended claims.

## Claims

1. Coating comprising a crosslinked reaction product of
(a) a copolymer of an Si-H terminated polydimethylsiloxane-containing compound having a plurality of substituents representing the reaction product of alkene-containing monomers; and
(b) a vinyl-containing silicone copolymer.

2. Coating comprising a crosslinking reaction product of
(a) at least one silicone-based copolymer, and
(b) a copolymer consisting essentially of the reaction product of non-silicone containing monomers.

3. Textile having applied thereon the coating of claim 1 or 2.

4. Textile product having an applied coating, the coating comprising the crosslinked reaction product of:
(a) a copolymer, said copolymer having terminal Si-H groups, said copolymer further having a copolymeric chain of silicone monomers and non-silicone monomers; and
(b) a vinyl-containing silicone copolymer.

5. The textile product of claim 5, wherein copolymer (a) is reacted with copolymer (b) at a location adjacent or upon the surface of the textile product, thereby forming the coating, and after application the coating is adapted for reducing the air permeability of the textile product.

6. The textile product of claim 4 comprising an automotive airbag, wherein a plurality of the non-silicone monomers in copolymer (a) are interspersed with the silicone monomers along the copolymer (a) in a chain, and the non-silicone monomers are selected from at least one of ethylene, vinyl acetate, propylene, isobutylene, isoprene, butadiene, and esters of acrylic acid.

7. Automotive safety airbag cushion coated with a coating material comprising the crosslinked reaction product of:
(a) a copolymer having terminal Si-H groups and comprising a copolymeric chain of silicone monomers and non-silicone monomers selected from ethylene, isobutylene, isoprene, vinyl acetate, propylene, butadiene and acrylic acid esters; and
(b) a silicone copolymer.

8. The cushion of claim 7 wherein the silicone copolymer (b) comprises a vinyl-containing silicone copolymer.

9. The cushion of claim 7 wherein the non-silicone monomers comprise ethylene, butadiene or an acrylic acid ester.

10. Method of making a coating, said method comprising the steps of:
(a) polymerizing silicone-containing monomers and at least one non-silicone monomer selected from ethylene, isobutylene, isoprene, vinyl acetate, propylene, butadiene and acrylic acid esters, to form a plurality of copolymeric chains, and
(b) reacting the plurality of copolymeric chains with a catalyst facilitating the formation of crosslinking chemical bonds between them to form a coating.

11. The method of claim 10 wherein during step (b) a silicone polymer is provided for reaction to form the copolymeric chains forming said coating.

12. The method of claim 11 wherein the silicone polymer reacted in step (b) comprises a vinyl-containing silicone polymer.

13. The method of claim 10 wherein step (b) is conducted on the surface of a textile.
